# EUROPEAN PATENT SPECIFICATION

(11) **EP 3 919 315 B1**
(45) Date of publication and mention of the grant of the patent: **12.03.2025**
(21) Application number: 20748306.6
(22) Date of filing: 31.01.2020
(51) Int. Cl.: B60L 53/12, B60L 53/18, B60L 53/38, B60L 53/36, H02J 50/10, H02M 1/42, H01B 7/02, H01B 9/02, B60L 5/42, B60L 9/00, B60L 53/30, B60L 5/00, H01F 27/36, H01F 38/14, B60M 7/00

(54) **WIRELESS CHARGING AND FEEDING SYSTEM DURING DRIVING OF ELECTRIC VEHICLE AND INDUSTRIAL EQUIPMENT**
SYSTEM ZUM DRAHTLOSEN LADEN UND VERSORGEN VON ELEKTROFAHRZEUGEN UND INDUSTRIELLER AUSRÜSTUNG WÄHREND DER FAHRT
SYSTÈME DE CHARGE ET D'ALIMENTATION SANS FIL PENDANT LA CONDUITE D'UN VÉHICULE ÉLECTRIQUE ET ÉQUIPEMENT INDUSTRIEL

(30) Priority: 01.02.2019 KR 20190013372; 31.10.2019 KR 20190137602
(43) Date of publication of application: 08.12.2021
(73) Proprietor: Wipowerone.Inc, Daejeon 34051 (KR)
(72) Inventor: CHO, Dong-Ho, Seoul 06718 (KR); SONG, Bo-Yune, Daejeon 34051 (KR); LEE, Kyo-Il, Sejong-si 30130 (KR); KANG, Seong-Joo, Daejeon 35220 (KR); JEONG, Ye-Chan, Daejeon 34929 (KR); SEO, Dong-Kwan, Daejeon 34119 (KR)
(74) Representative: Michalski Hüttermann & Partner Patentanwälte mbB
(86) International application number: PCT/KR2020/001548
(87) International publication number: WO 2020/159323

(56) References cited:
- EP-A1- 3 116 743
- EP-A2- 3 168 078
- EP-B1- 3 116 743
- DE-A1- 102013 000 900
- KR-A- 20120 091 965
- US-A1- 2012 217 111
- US-A1- 2013 119 774
- US-A1- 2014 320 090
- US-A1- 2017 072 807
- US-A1- 2017 158 064

## Description

### [Technical Field]

The present invention relates to a wireless charging power supply system, and more particularly, wireless charging power supply of electric vehicles in motion, such as electric buses, electric cars, trams, light rails and subways.

### [Background Art]

Due to global warming, the use of electric power using batteries as an energy source to replace petroleum energy is increasing for transportation means such as automobiles and railroads. Currently, there has been a limit to the more general distribution of electric vehicles due to the insufficient capacity of the battery, which requires a short driving range and frequent charging, as well as insufficient infrastructure such as charging stations and the time required for charging. However, a power supply system has also been installed to enable wireless charging on the road while driving.

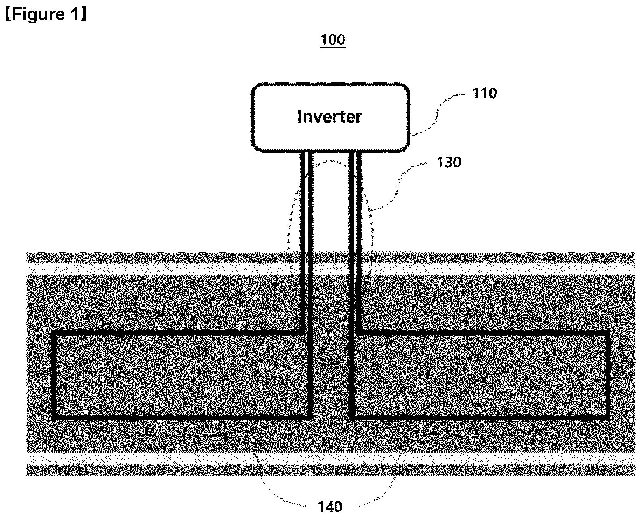

Figure 1 is a diagram illustrating a power supply line of a wireless charging system 100 while driving of a conventional wireless charging electric vehicle. The power supply line is placed on the left and right with the inverter 101 as the center and is composed of a single coil.

From the inverter 110, a sinusoidal current is applied to the power supply line composed of the common line portion 130 and the power supply region 140, and the applied current returns to the inverter 110.

In this configuration, it is possible to wirelessly charge electric vehicles and industrial equipment by composing a power supply line without too much trouble in the low frequency range (20-40 kHz). However, due to the weight and size of the wireless charging pad installed in the vehicle, EMF, and the limitations of wireless charging which is relatively expensive compared to wired charging, the frequency of wireless charging is being changed from 20-40 kHz to 85 kHz based on many studies. Although advantages can be secured according to the changed frequency, it has the disadvantage that the problem of withstand voltage for frequency increase always exists.

That is, if the frequency is raised from 20-40 kHz to 85 kHz according to the current wireless charging trend for electric vehicles, the withstand voltage between both ends in the same power supply line increases by about 4.25 times, which may cause problems such as discharge and leakage current, etc. In order to suppress this, a method of shortening the length of the power supply line or reducing the current used may be proposed. However, if the length is shortened, the charging time of the electric vehicle while driving is shortened, resulting in a problem that the charging amount is significantly reduced. Reducing the current may also be a solution, but when the current is reduced, a voltage lower than the battery voltage is formed as an excitation electromotive force, which may cause a problem in that charging the battery is not easy. In addition to the frequency problem, in the case of the existing wireless charging power supply system 100 while driving an electric vehicle, a single coil is wound in one turn in the vehicle travel direction, so compatibility with wireless charging pads attached to other vehicles may be lacking.

### [Disclosure]

### [Technical Problem]

The present invention was devised to solve such problems and the object of the present invention is to provide a wireless charging power supply and pick-up system that more effectively reduces the withstand pressure of the power supply line, improves the compatibility with various wireless charging pick-up pads installed in the vehicle in a way that further reduces the cost, and also reduces EMI (ElectroMagnetic Interference) of the power supply line.

Another object of the present invention is to provide a new method for improving the limitation of the power supply line section length and the problem of dead zones during wireless charging while driving.

Systems, methods, and apparatus are disclosed in EP 3 116 743 A1 for wirelessly charging an electric vehicle. In one aspect, a method of wirelessly charging an electric vehicle is provided. The method includes, obtaining a request from the electric vehicle for a level of charging power to be delivered from a power transmitter to the electric vehicle via a charging field. The method further includes controlling a current or voltage of the power transmitter based on a power efficiency factor and the requested level of charging power.

In US 2017/158064 A1 on the ground, a plurality of primary power supply transformers are separately installed with a longitudinal direction of magnetic poles matching a vehicle traveling direction. The primary power supply transformers each include a double-sided coil with an H-shaped core around which a wire is wound. On a vehicle, a secondary power supply transformer including an H-shaped core is mounted with a longitudinal direction of magnetic poles matching a vehicle front-back direction.

In EP 3 168 078 A2 a contactless power transmission system is provided for supplying power contactlessly from a power transmission apparatus to a power reception apparatus.

The method of DE 10 2013 000900 A1 involves activating only stationary primary coils, which are magnetically coupled with a secondary coil of moving objects due to an instantaneous position of the objects, where the activation follows a movement of the moving objects.

### [Technical Solution]

The invention is set out in the appended set of claims. To achieve the above-mentioned objects, in accordance with one aspect of the present invention, there is provided a system for controlling the wireless charging power of electric in motion, comprising: a power supply cable for generating power for wireless charging by flowing an AC current; an inverter for controlling the supply of the AC current flowing through the power supply cable and including a relay unit for adjusting the phase of the AC current to 0 degrees or 180 degrees; and, a capacitor unit including a relay for adjusting the phase of the AC current to 0 degrees or 180 degrees under the control of the inverter, and one or more capacitor for offsetting the inductance of the power supply cable, wherein a first part of the power supply cable is connected between the inverter and the capacitor unit without returning to the inverter, when two or more capacitor units are provided, another part of the power supply cable is connected between the nth capacitor unit and the (n+1)th capacitor unit without returning to the nth capacitor unit, wherein a final part of the power supply cable is connected between the last capacitor unit and the inverter, wherein a power supply region is made between the inverter and the capacitor unit via the first part of the power supply cable and the final part of the power supply cable, when two or more capacitor units are provided, an additional power supply region is made between each capacitor units via the corresponding another part of the power supply cable and the final part of the power supply cable, wherein a final power supply region is made after the last capacitor unit via the final part of the power supply cable only, wherein each power supply region acts like a coil for generating power for wireless charging.

The coil constituting the power supply cable may be composed of one pair or two or more pairs.

The system may further comprise a ferromagnetic power supply core under the power supply cable.

Preferably, when the power supply cable consists of n (n≥2) pairs of coils, each coil can independently adjust the current phase by means of the relay, so any combination of 0 degree or 180 degree phase is possible for the n pairs of coils, and wherein the wireless power supplied through the power supply cable is controlled by the control of the current phase combination.

Preferably, when the power supply cable consists of n (n≥2) pairs of coils, each coil is arranged to be in contact without a separation distance, or arranged to be spaced apart from each other by a certain distance. The coil and the power supply core constituting the power supply cable may be arranged to be in contact without a separation distance, or arranged to be spaced apart from each other by a certain distance.

Preferably, each coil in a section in which each coil constituting the power supply cable is collected is set in a direction of current so that the magnetic field is offset by more than a preset standard.

The system, in a section where each coil constituting the power supply cable is collected, may further comprise a shielding tube surrounding the entire coil to shield the magnetic field.

Preferably, when the electric vehicle enters a power supply section, the inverter detects a location of the electric vehicle and information on a pick-up mounted on the electric vehicle, and controls the electric power at a point where the electric vehicle is located according to the detected pick-up information; and wherein, when the electric vehicle leaves the location, the inverter controls to cut off the electric power at the location. The location of the electric vehicle may be a power supply segment in which the electric vehicle is located. The information on the pick-up may be a type of the pick-up or a height of the pick-up from the ground.

In accordance with another aspect not according to the invention, present for illustration purposes only, there is provided a method of controlling power supply of the wireless charging power supply system of the present invention, comprising the steps of: (a) detecting, by the inverter, a position of the electric vehicle equipped with a pick-up when the electric vehicle enters a power supply section controlled by the inverter; (b) determining, by the inverter, information on the pick-up mounted on the electric vehicle; (c) switching, by the inverter, the position where the electric vehicle is located to a charging mode according to the determined pick-up information, and controlling the power to be supplied to the position; and, (d) switching, by the inverter, when the electric vehicle leaves the position, the position to off mode to cut off the power. Preferably, the position of the electric vehicle is a power supply segment in which the electric vehicle is located.

The information on the pick-up may be a type of the pick-up or a height of the pick-up from the ground.

Preferably, when the power supply cable consists of n (n≥2) pairs of coils, each coil can independently adjust the current phase by means of the relay, so any combination of 0 degree or 180 degree phase is possible for the n pairs of coils, and wherein the wireless power supplied through the power supply cable is controlled by the control of the current phase combination.

### [Advantageous Effects]

According to the present invention, it is possible to expand the wireless power supply line while driving by solving the conventional withstand voltage problem on the power supply line with a capacitor provided in a 'box' or an 'inverter' located outside the road, a power supply line design, and a common line arrangement design. According to this scalability, there is an effect of greatly improving the economic problem of the wireless charging system.

At the same time, in contrast to the conventional method of maintaining compatibility with various wireless charging and pick-up pads installed in the vehicle by using multiple inverters, a wireless charging and pick-up system that satisfies such compatibility at a lower cost is provided by utilizing the relays present in the 'box' and 'inverter'. Furthermore, there is an effect of reducing EMI (ElectroMagnetic Interference) of the power supply line by maximizing the magnetic field cancellation effect by the design of the common line and the shielding tube.

In addition, the present invention has an effect of providing a new method for improving the limitation of the length of the power supply line section and the problem of dead zones during wireless charging while driving.

### [Description of Drawings]

Figure 1 is a view showing a power supply line of a conventional wireless charging power supply system.
Figure 2 is a schematic diagram showing a wireless charging power supply system according to the present invention when an electric vehicle on a road.
Figure 3 is a view showing the coil structure of the power supply line of the wireless charging power supply system according to the present invention.
Figure 4 is a view showing the shape and structure of a ferromagnetic material forming a power supply core of the wireless charging power supply system according to the present invention.
Figure 5 is a diagram illustrating a distance between coils, which is a design variable, and a distance between a coil and a ferromagnetic material, which is a power supply core, of the wireless charging power supply system according to the present invention.
Figure 6 is a graph showing changes in inductance per unit distance of a power supply line according to design variables shown in Figure 5.
Figure 7 is a view illustrating a method of installing a common line portion in the wireless charging power supply system according to the present invention.
Figure 8 is a flowchart illustrating a power supply control method in the wireless charging power supply system according to the present invention.

### [Mode for Invention]

Hereinafter, preferred embodiments of the present invention will be described in detail with reference to the accompanying drawings. The terms or words used in the present specification and claims should not be construed as being limited to conventional or dictionary meanings and, based on the principle that the inventor can appropriately define the concept of a term in order to explain his invention in the best way, it should be interpreted as a meaning and concept consistent with the technical idea of the present invention. The embodiments described in the present specification and the configurations shown in the drawings are only the most preferred embodiment of the present invention and do not represent all the technical spirit of the present invention. So at the time of the present application, it should be understood that various equivalents and modifications may be substituted for them at the time of filing the present application.

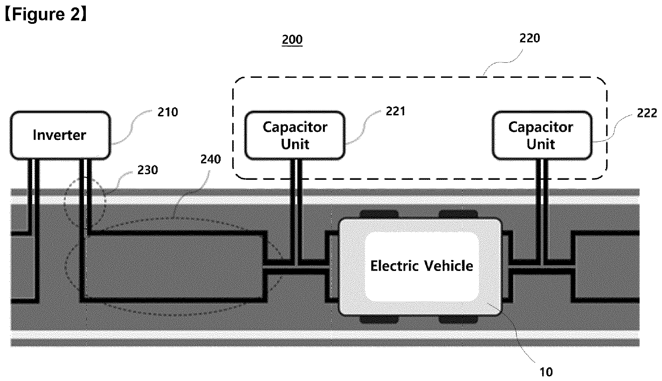

Figure 2 is a schematic diagram illustrating a wireless charging power supply system according to the present invention when an electric vehicle on a road.

Hereinafter, 'power supply cable' or 'power supply coil' will be used interchangeably with the same meaning.

The wireless charging power supply system 200 according to the present invention performs wireless power transfer of an electric vehicle 10 (bus, tram, train, passenger car, etc.). The power supply line includes a power supply unit composed of a plurality of power supply pads, an inverter 210 supplying AC power to the power supply unit, and a common line 230 connecting the inverter 210 and the power supply unit. The power supply unit includes a power supply core made of a ferromagnetic material and a power supply cable 240.

The configuration of the inverter 210 or the box 220 of the wireless charging power supply system 200 of the present invention is not limited to the inverter or box, and may include a switch or other power device. Since these devices also implement the same functions as those implemented through an inverter or a box, they will be collectively referred to as the inverter 210 and box 220 in the following description. The term 'box' means a box comprising a circuit unit that includes a capacitor and a relay. Hereinafter, it will be referred to as a 'capacitor unit 220' to distinguish it from the inverter 210. Such a relay is also provided in the inverter 210.

In the present invention, as shown in Figure 2, the common line connecting the power supply unit and the inverter does not return but are extended and connected to the next inverter or capacitor unit 220 . Similarly, even when two or more capacitor units 220 are provided (221, 222 ...), as shown in Figure 2, the other end of the power supply cable having one end connected to the nth capacitor unit is connected to the (n+1)th capacitor unit without returning to the nth capacitor unit.

The wireless charging power supply system 200 of the present invention of Figure 2 includes a power supply line having compatibility so that charging is possible even when various types of wireless charging pads are attached to various types of vehicles. When the power supply line is configured as shown in Figure 2, the withstand voltage of the power supply line can be more effectively reduced through the capacitor provided in the inverter 210 or in the capacitor unit 220. The reason that the withstand voltage of the power supply line can be reduced is because the capacitor cancels the inductance generated in the power supply line.

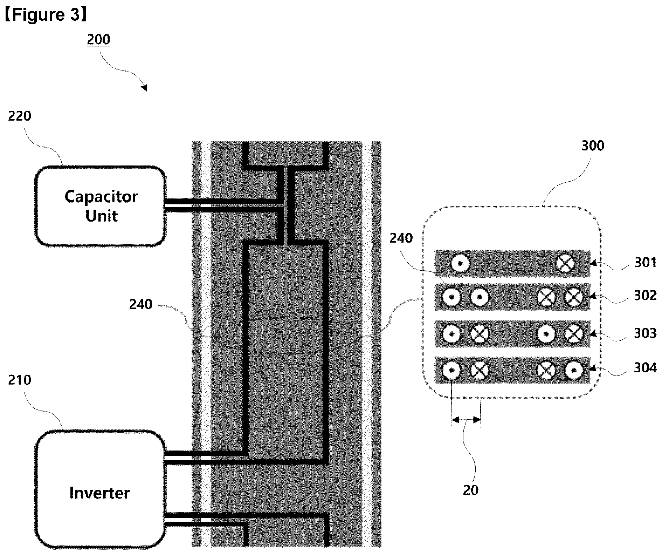

Furthermore, an advantage of the present invention is that a plurality of inverters are not used to implement the above-described compatibility. When a plurality of inverters are used, a large amount of installation cost is incurred, thereby lowering the economic feasibility. In the present invention, such compatibility is sufficiently secured through one inverter 210 and one or more capacitor units 220 connected to the inverter 210 as shown in Figure 2. That is, compatibility can be secured by changing the current phase through the relay disposed on the inverter 210 or the capacitor unit 220 . A method of implementing such compatibility will be described later in detail with reference to Figure 3.

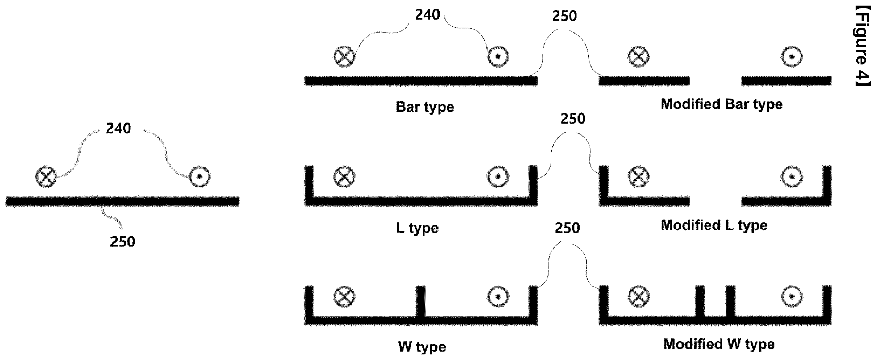

In addition, the shape of the power supply line of the wireless charging power supply system 200 may have various shapes, including an oval or circular structure. As the power supply core, a ferromagnetic material such as a ferrite core may or may not be accompanied. When a ferromagnetic material is provided as a power supply core, an embodiment of the shape of such a ferromagnetic material will be described later with reference to Figure 4.

In the coil structure of the power supply line, one coil may be configured as a pair or may be configured as two or more pairs, an example of which is shown in Figure 3.

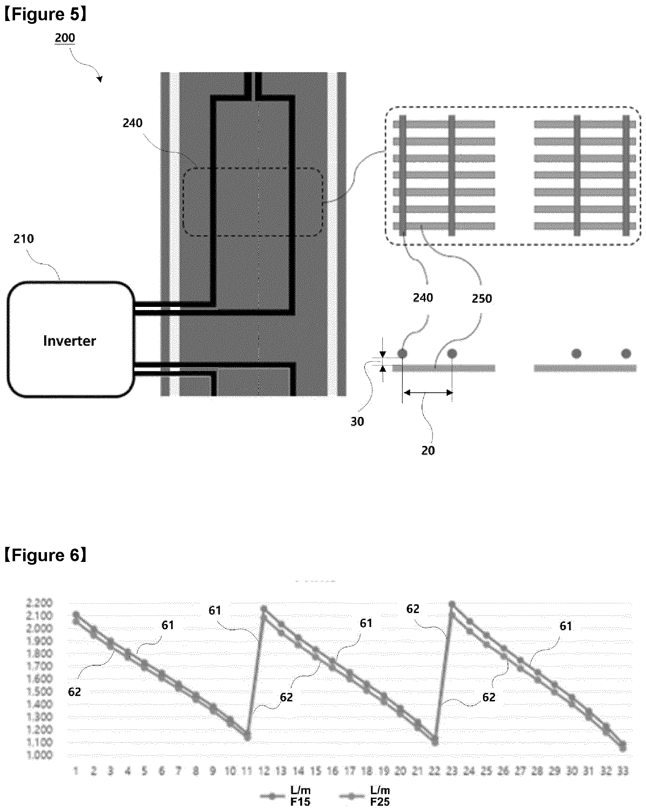

In the case of a power supply line composed of two or more pairs of coils, the current direction of each coil of the power supply line may be made in all possible combinations. An interval of a pair of coils or two or more pairs of coils may include various intervals including equal intervals, which will be described later with reference to Figs. 3 and 5.

Figure 3 is a view showing the coil structure of the power supply line of the wireless charging power supply system 200 according to the present invention and Figure 4 is a diagram showing the shape and structure of a ferromagnetic material forming a power supply core of a wireless charging power supply system 200 according to the present invention. The shape and structure of the ferromagnetic material may include bar-type, L-type, W-type, and all deformed shapes thereof.

In Figure 3, a cross-section embodiment 300 of the power supply cable 240 constituting the power supply line, that is, a cross-section indicating the direction of current flowing in the power supply cable 240 is shown.

As in the cross-section embodiment 300, the power supply line may be composed of a single coil 301 or a plurality of coils 302, 303, 304. In the drawing, the direction in which the current flows out is indicated by '·' and the direction in which the current flows in is indicated by 'X'. In this drawing, only three examples of 301, 302, and 303 are illustrated in the case of using two coils, but any combination of two '·' and two 'X' is of course possible.

According to the control of the relay of the inverter 210 and the relay of the capacitor unit 220, the direction of the current in each coil can be controlled as '·' or 'X'. That is, according to the control of the relay of the inverter 210 and the relay of the capacitor unit 220, the phase of the current in each coil may be controlled to 0 or 180 degrees. By controlling the phase of each coil, it is possible to generate wireless power by the magnetic flux transmitted to the upper part in the corresponding power supply line section to enter the charging mode, or to cancel the magnetic flux to cut off the power (off mode). For example, in the case of 302 in Figure 3, magnetic flux is generated from the current of the power supply cable 240, so that the pick-up is in the charging mode. However, in the case of 303, the pair of coils on the left side cancel each other out as currents of opposite phases, so that no power is generated for charging. Similarly, no power is generated on the pick-up by the pair of coils on the right.

In this way, the phase control of the current may perform various controls in addition to switching to the charging mode or the off mode. For example, in the case of 303 or 304 of Figure 3, power may be generated on the pick-up according to the distance 20 between the two coils even if the phases of currents in the pair of coils on the left are opposite to each other. That is, if the two coils are arranged very close to each other, little power will be generated on the pick-up, but as the distance between the two coils is more than a certain interval, the generated power on the pick-up increases. As described above, depending on the distance between the coils 20 and the distance between the coil 240 and the lower power supply core 250 (30, see Figure 5 ), the generated power when the same phase current flows through the pair of coils on both sides and the generated power when the opposite phase current flows change to be compatible with the pickup on the pick-up.

The inverter 210 for controlling the magnitude and phase of the generated current turns on or off the wireless power generation of the corresponding section according to whether a vehicle is present in a specific segment of the power supply line section. In addition, by detecting the type of a pick-up device mounted on a vehicle passing through the section and the height of the pick-up that has a difference from the ground of the power supply line depending on a large vehicle or passenger car, etc., it is possible to control the phase of the current flowing in the power supply cable 240 (i.e., the coil 240 as shown in the embodiment 300 of Figure 3 ) of the power supply line so that wireless power is supplied.

Such control of the phase of the current by the inverter 210 is performed by controlling the relay provided in the inverter 210 and the relay provided in the capacitor unit 220 of each section.

That is, when the power supply cable 240 is composed of n (n≥2) pairs of coils, each coil can independently adjust the phase of the current by a relay under the control of the inverter 210. Any combination of 0 degree or 180 degree phase is possible for n pairs of coils. By controlling the current phase combination of the inverter 210 as described above, the wireless power supplied through the power supply cable is controlled.

As described above, for various types of pick-ups and installation heights of various pick-ups, it is 'compatibility' as described above to automatically control and supply an appropriate amount of wireless power for charging.

In addition, the inductance of the power supply line can be reduced by controlling the phase.

Figure 5 is a diagram showing a distance 20 between the coil 240 and a distance 30 between the coil 240 and the ferromagnetic material 250 that is a power supply core, which are design variables of the wireless charging power supply system 200 according to the present invention. Figure 6 is a graph showing a change in inductance per unit distance of a power supply line according to the design variable shown in Figure 5.

Figure 5 shows a method for securing compatibility according to the interval between coils constituting the power supply line and for extending the section due to the reduction of inductance. An advantageous condition can be determined by converting an inductance value according to a change in the distance between the coils 20 and the distance 30 between the coil and the ferromagnetic material into a unit distance. That is, each coil may be disposed to contact each other without a separation distance, or may be disposed to be spaced apart from each other by a predetermined distance. The coil constituting the power supply cable and the power supply core may also be disposed to contact each other without a separation distance, or may be disposed to be spaced apart from each other by a predetermined distance.

In Figure 6, the F15 line 61 indicates that the separation distance 30 between the ferromagnetic material and the coil is 15 mm, and F25 line 62 indicates that the separation distance 30 between the ferromagnetic material and the coil is 25 mm. In addition, the value of the x-axis (horizontal axis) of the graph represents the distance 20 between the coils, and the y-axis (vertical axis) means inductance per unit length.

The 66 dots on each line in the graph show examples of a total of 66 designs for the design variables (20, 30) of the interval, and the appropriate design variable values according to the environment and various conditions in which the power supply line is installed can be set.

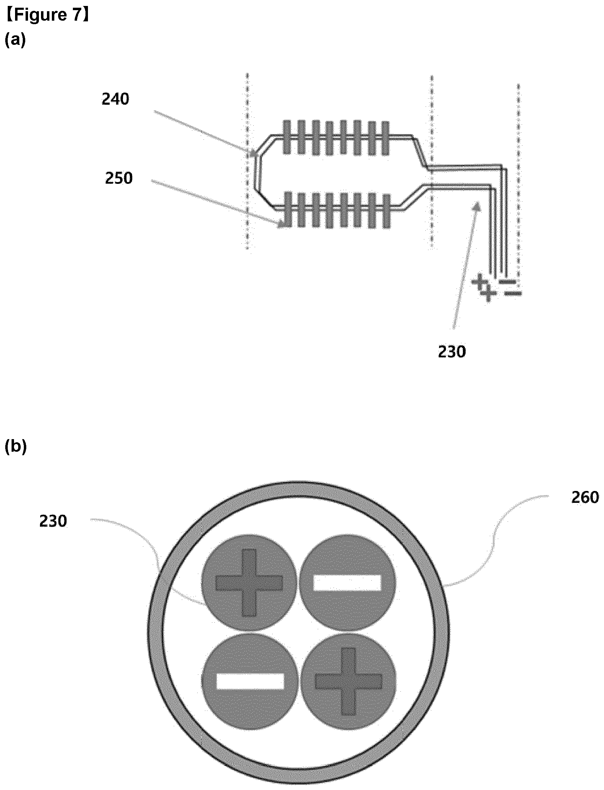

Figure 7 is a diagram illustrating a method of locating a portion of the common line 230 in the wireless charging power supply system 200 according to the present invention. The common line refers to a portion where the power supply cables 240 are gathered, that is, a portion 230 (refer to Figure 2) where the power supply cables are gathered from, for example, the inverter 210 or the capacitor unit 220. The common line 230 is wrapped by the shielding tube 260 to shield the magnetic field and, as shown in Figure 7(b), the inductance can be reduced by maximizing the magnetic field cancellation effect by adjusting the direction of the current.

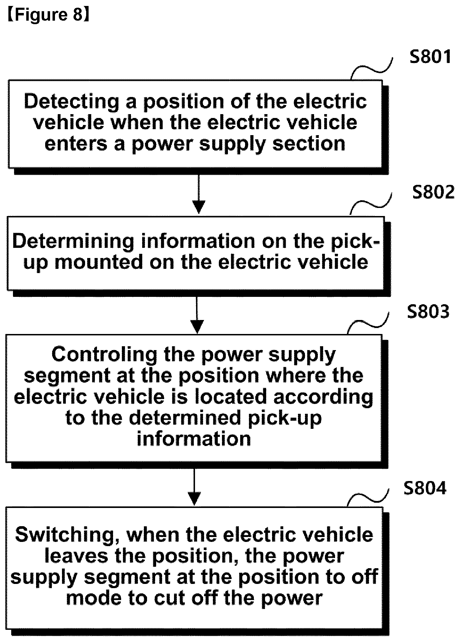

Figure 8 is a flowchart illustrating a power supply control method in the wireless charging power supply system 200 according to the present invention. The control of Figure 8 is performed by the inverter 210. When the electric vehicle 10 equipped with a pick-up enters the power supply section controlled by the inverter 210, the position of the corresponding vehicle is detected (S801). The power supply section controlled by the inverter means all the capacitor units 220 connected to the corresponding inverter 210 and the power supply cable section connected thereto. The detected location of the corresponding vehicle means in which power supply segment within the corresponding power supply section the vehicle is. The power supply segment refers to a power supply line between the inverter 210 and the next capacitor unit 221 (refer to Figure 2), and a power supply line between the next capacitor unit 221 (refer to FIGURE 2) and another next capacitor unit 222 (refer to Figure 2), etc. Referring to Figure 2, if the power supply line between the inverter 210 and the next capacitor unit 221 (see Figure 2) is referred to as a first power supply segment, and the power supply line between the next capacitor unit 221 (see FIGURE 2 ) and another next capacitor unit 222 (see Figure 2) is referred to as a second power supply segment, the vehicle currently enters the second power supply segment.

Such position detection (S801) may be performed in various ways. As an embodiment, the method may be performed by receiving GPS information of the corresponding vehicle 10 and identifying a power supply segment within the current power supply section of the inverter 210. Alternatively, the inverter 210 connected to the power supply segment in which the vehicle 10 is located may directly detect the vehicle entry, or the capacitor units 221 and 222 connected to the power supply segment may detect the vehicle entry and send a signal to the inverter 210.

Thereafter, the inverter 210 connected to the power supply segment in which the corresponding vehicle 10 is located may directly detect information on the pick-up mounted on the corresponding vehicle 10. Alternatively, the capacitor units 221 and 222 connected to the power supply segment may detect information on the pick-up mounted on the vehicle 10 and transmit the information to the inverter 210, and the inverter 210 may determine the pick-up information (S802). The pick-up information may include a type of the pick-up, a height of the pick-up from the ground, and the like.

The inverter 210 switches the power supply segment in which the vehicle is located to the charging mode according to the detected pick-up information and controls the power to be supplied (S803). Such power control, as described above with reference to Figure 3, controls the phase of the current of each coil 240 by controlling the relay of the inverter 210 and the capacitor unit 221 or 222 of the corresponding power supply segment.

Afterwards, when the corresponding vehicle 10 leaves the power supply segment, the inverter 210 switches the corresponding power supply segment to an off mode to cut off the power of the corresponding power supply segment (S804). The power cut-off of the power supply segment may also be performed by controlling the relay of the capacitor unit 221 or 222 of the corresponding power supply segment to control the phase of the current of each coil 240.

As described above, although the present invention has been described with reference to limited embodiments and drawings, the present invention is not limited thereto, and the technical idea of the present invention and claims by those of ordinary skill in the art to which the present invention pertains. Various modifications and variations are possible within the scope of the claims to be described.

## Claims

1. A system (200) for controlling the wireless charging power of electric vehicles (10) in motion, comprising:
a power supply cable (240) for generating power for wireless charging by flowing an AC current;
an inverter (210) for controlling the supply of the AC current flowing through the power supply cable (240) and including a relay unit for adjusting the phase of the AC current to 0 degrees or 180 degrees; and, **characterized by**
one or more capacitor unit (220) including a relay for adjusting the phase of the AC current to 0 degrees or 180 degrees under the control of the inverter (210), and a capacitor (220) for offsetting the inductance of the power supply cable (240),
wherein a first part of the power supply cable (240) is connected between the inverter (210) and the capacitor unit (220) without returning to the inverter (210),
when two or more capacitor units (220) are provided, another part of the power supply cable (240) is connected between the nth capacitor unit (220) and the (n+1)th capacitor unit (220) without returning to the nth capacitor unit (220),
wherein a final part of the power supply cable (240) is connected between the last capacitor unit (220) and the inverter (210),
wherein a power supply region is made between the inverter and the capacitor unit (220) via the first part of the power supply cable and the final part of the power supply cable,
when two or more capacitor units (220) are provided, an additional power supply region is made between each capacitor units (220) via the corresponding another part of the power supply cable and the final part of the power supply cable,
wherein a final power supply region is made after the last capacitor unit (220) via the final part of the power supply cable only,
wherein each power supply region acts like a coil (301) for generating power for wireless charging.

2. The system (200) according to claim 1, further comprising a ferromagnetic power supply core under the power supply cable (240).

3. The system (200) according to claims 1 or 2, wherein, when the power supply cable (240) consists of n (n≥2) pairs of coils (301), each coil (301) can independently adjust the current phase by means of the relay, so any combination of 0 degree or 180 degree phase is possible for the n pairs of coils (301), and wherein the wireless power supplied through the power supply cable (240) is controlled by the control of the current phase combination.

4. The system (200) according to claims 1 or 2, wherein, when the power supply cable (240) consists of n (n≥2) pairs of coils (301), each coil (301) is arranged to be in contact without a separation distance, or arranged to be spaced apart from each other by a certain distance

5. The system (200) according to claim 2, wherein the coil (301) and the power supply core constituting the power supply cable (240) are arranged to be in contact without a separation distance, or are arranged to be spaced apart from each other by a certain distance.

6. The system (200) according to claim 1, wherein each coil (301) in a section in which each coil (301) constituting the power supply cable (240) is collected is set in a direction of current so that the magnetic field is offset by more than a preset standard.

7. The system (200) according to claim 1, in a section where each coil (301) constituting the power supply cable (240) is collected, further comprising a shielding tube (260) surrounding the entire coil (301) to shield the magnetic field.

8. The system (200) according to claim 3, wherein, when the electric vehicle (10) enters a power supply section, the inverter (210) detects a location of the electric vehicle (10) and information on a pick-up mounted on the electric vehicle (10), and controls the electric power at a point where the electric vehicle (10) is located according to the detected pick-up information; and wherein, when the electric vehicle (10) leaves the location, the inverter (210) controls to cut off the electric power at the location.

9. The system (200) according to claim 8, wherein the location of the electric vehicle (10) is a power supply segment in which the electric vehicle (10) is located.

10. The system (200) according to claim 8, wherein the information on the pick-up is a type of the pick-up or a height of the pick-up from the ground.

## Patentansprüche

1. System (200) zur Steuerung der drahtlosen Ladeleistung von in Bewegung befindlichen Elektrofahrzeugen (10), das Folgendes umfasst:
ein Stromversorgungskabel (240) zur Erzeugung von Strom für das drahtlose Laden durch Fließen eines Wechselstroms;
einen Wechselrichter (210) zur Steuerung der Zufuhr des durch das Stromversorgungskabel (240) fließenden Wechselstroms, der eine Relaiseinheit zur Einstellung der Phase des Wechselstroms auf 0 Grad oder 180 Grad enthält; und, **gekennzeichnet durch**
eine oder mehrere Kondensatoreinheiten (220) mit einem Relais zum Einstellen der Phase des Wechselstroms auf 0 Grad oder 180 Grad unter der Steuerung des Wechselrichters (210) und einem Kondensator (220) zum Ausgleichen der Induktivität des Stromversorgungskabels (240),
wobei ein erster Teil des Stromversorgungskabels (240) zwischen dem Wechselrichter (210) und der Kondensatoreinheit (220) angeschlossen ist, ohne zum Wechselrichter (210) zurückzukehren,
wenn zwei oder mehr Kondensatoreinheiten (220) vorgesehen sind, wird ein anderer Teil des Stromversorgungskabels (240) zwischen der n-ten Kondensatoreinheit (220) und der (n+1)-ten Kondensatoreinheit (220) angeschlossen, ohne zur n-ten Kondensatoreinheit (220) zurückzukehren,
wobei ein letzter Teil des Stromversorgungskabels (240) zwischen der letzten Kondensatoreinheit (220) und dem Wechselrichter (210) angeschlossen ist,
wobei ein Stromversorgungsbereich zwischen dem Wechselrichter und der Kondensatoreinheit (220) über den ersten Teil des Stromversorgungskabels und den letzten Teil des Stromversorgungskabels hergestellt wird,
wenn zwei oder mehr Kondensatoreinheiten (220) vorgesehen sind, wird ein zusätzlicher Stromversorgungsbereich zwischen jeder Kondensatoreinheit (220) über den entsprechenden anderen Teil des Stromversorgungskabels und den letzten Teil des Stromversorgungskabels hergestellt,
wobei ein letzter Stromversorgungsbereich nach der letzten Kondensatoreinheit (220) nur über den letzten Teil des Stromversorgungskabels hergestellt wird,
wobei jeder Stromversorgungsbereich wie eine Spule (301) zur Erzeugung von Strom für das drahtlose Laden wirkt.

2. System (200) nach Anspruch 1, das ferner einen ferromagnetischen Stromversorgungskern unter dem Stromversorgungskabel (240) umfasst.

3. System (200) nach Anspruch 1 oder 2, wobei, wenn das Stromversorgungskabel (240) aus n (n≥2) Paaren von Spulen (301) besteht, jede Spule (301) unabhängig die Stromphase mit Hilfe des Relais einstellen kann, so dass jede Kombination von 0-Grad- oder 180-Grad-Phase für die n Paare von Spulen (301) möglich ist, und wobei die über das Stromversorgungskabel (240) gelieferte drahtlose Leistung durch die Steuerung der aktuellen Phasenkombination gesteuert wird.

4. System (200) nach Anspruch 1 oder 2, wobei, wenn das Stromversorgungskabel (240) aus n (n≥2) Paaren von Spulen (301) besteht, jede Spule (301) so angeordnet ist, dass sie ohne einen Trennungsabstand in Kontakt ist, oder so angeordnet ist, dass sie um einen bestimmten Abstand voneinander beabstandet ist.

5. System (200) nach Anspruch 2, wobei die Spule (301) und der Stromversorgungskern, die das Stromversorgungskabel (240) bilden, so angeordnet sind, dass sie ohne einen Trennungsabstand in Kontakt sind, oder so angeordnet sind, dass sie um einen bestimmten Abstand voneinander beabstandet sind.

6. System (200) nach Anspruch 1, wobei jede Spule (301) in einem Abschnitt, in dem jede Spule (301), die das Stromversorgungskabel (240) bildet, gesammelt wird, in einer Stromrichtung so eingestellt ist, dass das Magnetfeld um mehr als einen voreingestellten Standard versetzt ist.

7. System (200) nach Anspruch 1, in einem Abschnitt, in dem jede Spule (301), die das Stromversorgungskabel (240) bildet, gesammelt wird, ferner mit einem Abschirmrohr (260), das die gesamte Spule (301) umgibt, um das Magnetfeld abzuschirmen.

8. System (200) nach Anspruch 3, wobei, wenn das Elektrofahrzeug (10) in einen Stromversorgungsabschnitt einfährt, der Wechselrichter (210) einen Standort des Elektrofahrzeugs (10) und Informationen über einen an dem Elektrofahrzeug (10) angebrachten Aufnehmer erfasst und die elektrische Leistung an einem Punkt, an dem sich das Elektrofahrzeug (10) befindet, gemäß den erfassten Aufnehmerinformationen steuert; und wobei, wenn das Elektrofahrzeug (10) den Ort verlässt, der Wechselrichter (210) steuert, um die elektrische Leistung an dem Ort zu unterbrechen.

9. System (200) nach Anspruch 8, wobei der Standort des Elektrofahrzeugs (10) ein Stromversorgungssegment ist, in dem sich das Elektrofahrzeug (10) befindet.

10. System (200) nach Anspruch 8, wobei die Information über den Aufnehmer ein Typ des Aufnehmers oder eine Höhe des Aufnehmers über dem Boden ist.

## Revendications

1. Système (200) pour commander la puissance de recharge sans fil de véhicules électriques (10) en mouvement, comprenant :
un câble d'alimentation électrique (240) pour générer de la puissance pour la recharge sans fil en faisant circuler un courant AC ;
un onduleur (210) pour commander l'alimentation du courant AC qui circule au travers du câble d'alimentation électrique (240) et incluant une unité de relais pour régler la phase du courant AC à 0 degré ou 180 degrés ; et
**caractérisé par**
une ou plusieurs unités de condensateur (220) incluant un relais pour régler la phase du courant AC à 0 degré ou 180 degrés sous la commande de l'onduleur (210), et un condensateur (220) pour compenser l'inductance du câble d'alimentation électrique (240),
dans lequel une première partie du câble d'alimentation électrique (240) est connectée entre l'onduleur (210) et l'unité de condensateur (220) sans retour sur l'onduleur (210),
lorsque deux unités de condensateur ou plus (220) sont prévues, une autre partie du câble d'alimentation électrique (240) est connectée entre la n-ième unité de condensateur (220) et la (n + 1)-ième unité de condensateur (220) sans retour sur la n-ième unité de condensateur (220),
dans lequel une partie finale du câble d'alimentation électrique (240) est connectée entre la dernière unité de condensateur (220) et l'onduleur (210),
dans lequel une région d'alimentation électrique est constituée entre l'onduleur et l'unité de condensateur (220) via la première partie du câble d'alimentation électrique et la partie finale du câble d'alimentation électrique,
lorsque deux unités de condensateur ou plus (220) sont prévues, une région d'alimentation électrique additionnelle est constituée entre chacune des unités de condensateur (220) via l'autre partie correspondante du câble d'alimentation électrique et la partie finale du câble d'alimentation électrique,
dans lequel une région d'alimentation électrique finale est constituée après la dernière unité de condensateur (220) via la partie finale du câble d'alimentation électrique seulement,
dans lequel chaque région d'alimentation électrique joue le rôle d'une bobine (301) pour générer de la puissance pour une recharge sans fil.

2. Système (200) selon la revendication 1, comprenant en outre un noyau d'alimentation électrique ferromagnétique sous le câble d'alimentation électrique (240).

3. Système (200) selon les revendications 1 ou 2, dans lequel, lorsque le câble d'alimentation électrique (240) est constitué par n (n ≥ 2) paires de bobines (301), chaque bobine (301) peut régler de manière indépendante la phase de courant au moyen du relais, de sorte qu'une quelconque combinaison de phases de 0 degré ou 180 degrés est possible pour les n paires de bobines (301), et dans lequel la puissance sans fil alimentée par le câble d'alimentation électrique (240) est commandée au moyen de la commande de la combinaison de phases de courant.

4. Système (200) selon les revendications 1 ou 2, dans lequel, lorsque le câble d'alimentation électrique (240) est constitué par n (n ≥ 2) paires de bobines (301), chaque bobine (301) est agencée pour être en contact sans distance de séparation ou est agencée pour que la séparation mutuelle soit égale à une certaine distance.

5. Système (200) selon la revendication 2, dans lequel la bobine (301) et le noyau d'alimentation électrique constituant le câble d'alimentation électrique (240) sont agencés pour être en contact sans distance de séparation ou sont agencés pour que la séparation mutuelle soit égale à une certaine distance.

6. Système (200) selon la revendication 1, dans lequel chaque bobine (301) dans une section dans laquelle chaque bobine (301) constituant le câble d'alimentation électrique (240) est collectée est définie selon un sens du courant de telle sorte que le champ magnétique soit décalé de plus qu'un standard prédéfini.

7. Système (200) selon la revendication 1, dans une section dans laquelle chaque bobine (301) constituant le câble d'alimentation électrique (240) est collectée, comprenant en outre un tube de protection (260) qui entoure la totalité de la bobine (301) pour assurer une protection vis-à-vis du champ magnétique.

8. Système (200) selon la revendication 3, dans lequel, lorsque le véhicule électrique (10) entre dans une section d'alimentation électrique, l'onduleur (210) détecte une localisation du véhicule électrique (10) et une information concernant un collecteur de puissance monté sur le véhicule électrique (10), et commande la puissance électrique en un point où le véhicule électrique (10) est localisé conformément à l'information de collecteur de puissance détectée ; et dans lequel, lorsque le véhicule électrique (10) quitte la localisation, l'onduleur (210) commande la coupure de la puissance électrique au niveau de la localisation.

9. Système (200) selon la revendication 8, dans lequel la localisation du véhicule électrique (10) est un segment d'alimentation électrique au niveau duquel le véhicule électrique (10) est localisé.

10. Système (200) selon la revendication 8, dans lequel l'information concernant le collecteur de puissance est un type du collecteur de puissance ou une hauteur du collecteur de puissance par rapport au sol.
